Europäisches Patentamt

(19) European Patent Office

Office européen des brevets

(11) Veröffentlichungsnummer: **0 298 951 B1**

(12) # EUROPÄISCHE PATENTSCHRIFT

(45) Veröffentlichungstag der Patentschrift:
04.09.91 Patentblatt 91/36

(51) Int. Cl.⁵: **B27K 5/00**, A62D 3/00, B09B 5/00

(21) Anmeldenummer: 88890173.3

(22) Anmeldetag: 04.07.88

(54) **Verfahren und Anordnung zur Behandlung von bei Verbrennung Schadstoffe freisetzendem Holz, bzw. Holzkohle.**

(30) Priorität: 10.07.87 AT 1751/87

(43) Veröffentlichungstag der Anmeldung:
11.01.89 Patentblatt 89/02

(45) Bekanntmachung des Hinweises auf die Patenterteilung:
04.09.91 Patentblatt 91/36

(84) Benannte Vertragsstaaten:
BE CH DE FR GB IT LI LU NL SE

(56) Entgegenhaltungen:
DE-C- 334 307
GB-A- 687 113
US-A- 1 762 785
US-A- 4 645 536

(56) Entgegenhaltungen:
CHEMICAL ABSTRACTS, Band 88, Nr. 22, 29. Mai 1978, Seite 109, Zusammenfassung Nr. 154554n, Columbus, Ohio, US; F. KOMORA: "Extraction of pentachlorophenol from impregnated wood and its further quantitative determination", & HOLZFORSCH. HOLZVERWERT. 1977, 29(6), 122-5

(73) Patentinhaber: Österreichisches Forschungszentrum Seibersdorf Ges.m.b.H.
Kramergasse 1
A-1010 Wien (AT)

(72) Erfinder: Leichter, Peter
Saikogasse 59/7/15
A-1220 Wien (AT)
Erfinder: Trombitas, Herbert
Altstadt
A-2460 Bruck/Leitha (AT)
Erfinder: Vesely, Andreas, Dipl.-Ing. Dr.techn.
Reisnerstrasse 33/4
A-1030 Wien (AT)

EP 0 298 951 B1

**Beschreibung**

Die Erfindung betrifft ein Verfahren zur Behandlung von bei Verbrennung Schadstoffe freisetzendem(r) Holz bzw. Holzkohle, vorzugsweise Holzbauteilen, Bauholz usw., insbesondere von mit Holzschutzmitteln behandelten, z.B. konservierten, gestrichenen, imprägnierten Holzbauteilen bzw. Bauholz, z.B. Eisenbahnschwellen, Leitungsmasten, Wasser- und Brückenhölzern od.dgl., zum Entzug von Schadstoffen.

Die Erfindung betrifft ferner eine Anordnung zur Behandlung von bei Verbrennung Schadstoffe freisetzendem Holz bzw. Holzkohle, vorzugsweise Holzbauteilen, Bauholz, usw., insbesondere von mit Holzschutzmitteln behandelten, z.B. konservierten, gestrichenen, imprägnierten Holzbauteilen bzw. Bauholz, z.B. Eisenbahnschwellen, Leitungsmasten, Wasser- und Brückenhölzern od.dgl., zum Entzug von Schadstoffen, wobei für das in zerkleinerter Form vorliegende Holz bzw. die stückige Holzkohle ein Extraktor vorgesehen ist.

Verfahren zum Trocknen und Reifmachen bzw. Dehydratisierung und Imprägnierung von Holz sind bekannt. Derartige Verfahren werden z.B. in den DE-PS 100.558, DE-PS 228.268, der US-PS 2.435.219 bzw. GB-PS 1.402.191 beschrieben. Dabei wird das Holz meist in geschlossenen Gefäßen entweder mit einem Lösungsmittelgemisch erhitzt (wobei das Extraktionsmittel unter Umständen wiedergewonnen werden kann) oder das Holz wird in einem Bade einer wasserunlöslichen Substanz erhitzt, um das Wasser zu entfernen.

Die DE-PS 334.307 beschreibt ein Verfahren zur Wiedergewinnung der in imprägniertem Holz enthaltenen Konservierungsmittel durch fraktionierte Destillation von imprägnierten Bauhölzern wie Pfählen, Masten, Eisenbahnschwellen und dgl. Als Konservierungsmittel sind dabei Öle bzw. Harze angenommen. Ferner beschreibt die DE-C 334307 die Rückgewinnung von Imprägnierungsstoffen durch fraktionierte Destillation des Holzes, ohne Zusatz von organischem Lösungsmittel. Die US-A 1762785 beschreibt ein Verfahren, worin die natürlichen Harze des Holzes mittels verflüssigtem Butan extrahiert werden. Die GB 687113 beschreibt die Rückgewinnung des überschüssigen Imprägnierungsmittels aus frisch behandeltem Holz durch Einwirkung von organischen Lösungsmitteldämpfen. Die US-A 4645536 beschreibt einen Extraktor sowie die Extraktion aus Zedernholz von natürlichen antifungalen Verbindungen mittels Borax-Lösungen. Schließlich beschreiben die Chemical Abstract Nr. 78 154554 die Extraktion von Pentachlorphenol aus Abfallholz mittels Aceton, Alkohol usw.

Bei allen beschriebenen Verfahren ist es nicht möglich, die Schadstoffe, insbesondere Imprägniermittel, nahezu restlos zu entfernen, daß bei der nachfolgenden Verbrennung keine Schadstoffe mehr in die Atmosphäre freigesetzt werden.

Der Erfindung liegt deshalb die Aufgabe zugrunde, Schadstoffe aus Holz, insbesondere Bauholz wie z.B. mit Holzschutzmitteln, z.B. Steinkohlenteeröl, gegebenenfalls in gealterter Form, imprägnierten Holzbauteilen, Eisenbahnschwellen, Masten, Pfählen usw., bzw. Holzkohle nahezu vollständig zu entfernen, um danach das Holz bzw. die Holzkohle ohne Schadstoffemisionen verbrennen zu können. Auch Preßspannplatten und Spannplatten werden unter dem Begriff Holz verstanden.

Diese Aufgabe wird bei einem Verfahren der eingangs genannten Art dadurch gelöst, daß gegebenenfalls nach Zerkleinerung des Holzes bzw. der Holzkohle, das für die Extraktion in geeigneter Stückgröße vorliegende Holz bzw. die stückige Holzkohle einer Extraktion, insbesondere der organischen Schadstoffe, mit einem lösungsmittelgemisch unterworfen wird, das zumindest einen aliphatischen und-/oder cycloaliphatischen Kohlenwasserstoff und im Ausmaß von 2 bis 80%, vorzugsweise 3 bis 60%, des lösungsmittelgemisches zumindest eine polare aliphatische und/oder cycloaliphatische Verbindung enthält.

Eine Anordnung der eingangs genannten Art ist erfindungsgemäß dadurch gekennzeichnet, daß dem einen lösungsmittelbehälter umfassenden Extraktor eine Trocknungseinrichtung zum Austreiben des lösungsmittelgemisches aus dem Holz bzw. der Holzkohle nachgeordnet ist, die z.B. von einer Heizkammer, einer Induktionsspule, durch die das Holz bzw. die Holzkohle hindurchbewegt werden, od.dgl. gebildet ist und daß das in der Trocknungseinrichtung ausgetriebene schadstoffreie lösemittelgemisch in den Extraktor in den lösemittelbehälter rezirkuliert ist. Es war dem Fachmann bisher weder bekannt noch naheliegend, lösungsmittelgemische in der erfindungsgemäßen Art und Weise einzusetzen, wohl deshalb, weil er sich davon keinerlei nennenswerte Vorteile versprochen hat ; in Anbetracht der Vielzahl der existierenden bekannten und beschriebenen Vorgangsweisen zur Rückgewinnung der Imprägnierstoffe, läßt dies den Schluß zu, daß die erfindungsgemäße Vorgangsweise eine beträchtliche Abweichung von den bisherigen Gepflogenheiten darstellt und den Fachmann auf neue Wege führt. Auch der mit der erfindungsgemäßen Vorgangsweise erzielte Fortschritt ist beachtlich.

Abgesehen davon, daß die Kombination der beiden Arten von lösungsmitteln, nämlich von apolaren und polaren lösungsmitteln, für den Fachmann eine neue und erfinderische Vorgangsweise darstellt, ergibt sich jedoch auch eine beträchtliche synergistische Wirkung. Dazu wird auf die Beispiele verwiesen, die eindeutig klarlegen, daß eine Extraktion mit einem lösungsmittelgemisch, enthaltend apolare und polare lösungsmittel, Extraktionswerte ergeben, die beträchtlich, über denen lagen, die sich bei Einsatz der lösungsmittel in getrennter Form ergeben.

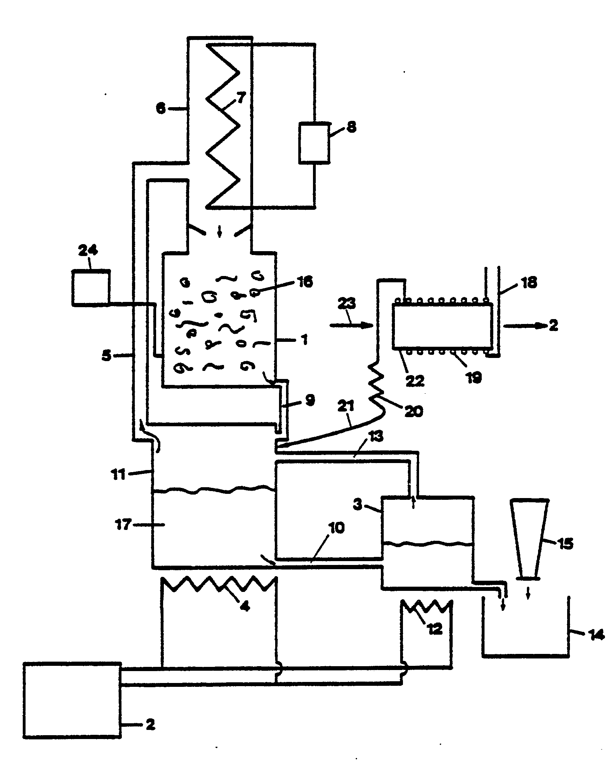

Der folgenden Beschreibung, den Unteransprüchen und der Zeichnung sind weitere vorteilhafte Ausführungsformen der Erfindung zu entnehmen.

Holzbauteile, wie Eisenbahnschwellen, Leitungsmasten, Brückenhölzer und dgl. wurden bzw. werden zwecks Erhöhung der Haltbarkeit mit Holzschutzmitteln imprägniert. Dafür kommen ölige Mittel, wie z.B. Steinkohlenteerol, als auch wasserlösliche Salze in Betracht. Bauhölzer sind insbesondere konserviert, lackiert od.dgl.. Darüberhinaus können noch zusätzlich Herbizide, Fungizide, Insektizide bzw. Substanzen mit biozider Wirkung im Holz vorhanden sein, die den Holzschutzmnitteln zugesetzt und/oder bei einer Nachbehandlung der imprägnierten Hölzer angewendet wurden bzw. werden. Bei der Verbrennung imprägnierter Holzbauteile kommt es stets zu einer Freisetzung von Schadstoffen. Aus öligen Holzschutzmitteln wie Steinkohlenteeröl, werden aromatische Verbindungen freigesetzt, die wegen der cancerogenen bzw. generell toxischen Wirkung eine Belasung für die Umwelt darstellen. Darüberhinaus ist bei Anwesenheit von organischen Chlorverbindungen und/oder Chloriden, die Bildung von hochtoxischen Dioxinen und/oder Dibenzofuranen zu befürchten. Aus anorganischen Holzschutzmitteln werden bei der Verbrennung Fluoride, Chloride sowie sublimierbare Verbindungen wie z.B. Arsen-, Antimon- und/oder Quecksilberverbindungen freigesetzt. Darüberhinaus ist auch hier bei Anwesenheit von organischen Chlorverbindungen und/oder Chloriden die Bildung von hoch toxischen Dioxinen und/oder Dibenzofuranen zu befürchten. Bei der Entsorgung von derartigen imprägnierten Holzbauteilen wie Eisenbahnschwellen, Leitungsmasten und dgl. besteht eine große Unsicherheit bezüglich der enthaltenen Schadstoffe, da nach jahrzehntelanger Verwendung nicht oder nicht mehr sichergestellt ist, welche Holzschutzmittel und Zusätze enthalten sind, ob und welche Zusätze nachträglich angewendet wurden und wie sich die Substanzen während der Verwendungsdauer verändert haben. Für eine geordnete Verbrennung derartiger Holzbauteile kommt aus Gründen der Umweltbelastung nur eine Feuerungsanlage mit Hochtemperaturnachverbrennung und Rauchgasnaßwäsche oder ein Hochtemperaturvergasungsverfahren in Frage. Derartige Verfahren haben jedoch die Nachteile, daß neben dem hohen Energieaufwand auch erhebliche Mengen an Sonderabfall in Form von Waschwässern und/oder Schlämmen anfallen, deren Beseitigung weitere energieintensive Arbeitsschritte erfordern. Holzkohle, die aus mit Schadstoffen belasteten Hölzern hergestellt wird, gibt bei ihrer Verbrennung diese Schadstoffe, insbesondere Schwermetalle, frei, die sich insbesondere auf den mit der Holzkohle zubereiteten Speisen absetzt.

Es wäre naheliegend, die Schadstoffe, insbesondere Imprägniermittel bzw. Schwermetalle mit spezifisch dafür geeigneten Lösemitteln zu entfernen, indem man das Holz aufeinanderfolgend mit geeigneten Lösemitteln oder deren Gemischen behandelt. So kann man beispielsweise Hölzer, die eine Grundimprägnierung auf Basis Chrom/Kupfer/Fluorid und eine Nachbehandlung mit Steinkohlenteeröl aufweisen, nacheinander mit Benzol, Toluol oder Xylol und Alkohol, oder einem Gemisch dieser Lösemittel und danach mit Mineralsäuren behandeln. Mit diesen Methoden ist es jedoch nicht möglich, alle Schadstoffe zu entfernen. Es ist auch nicht im Sinne der Erfindung, aromatische Lösemittel anzuwenden, da Reste dieser Lösemittel im extrahierten Holz neuerlich zur Bildung toxischer Schadstoffe bei der Verbrennung führen können.

Überraschenderweise wurde nun festgestellt, daß bei Anwendung der erfindungsgemäß vorgeschlagenen Lösemittelgemische eine synergistische Wirkung festzustellen ist, das heißt, daß bei Anwendung dieser Lösemittelgemische die vollständige Entfernung der Schadstoffe effizienter und in kürzerer Zeit erzielbar ist, als bei Anwendung einzelner Lösemittel mit spezifischer Wirkung oder Gemisch spezifisch wirksamer Lösemittel.

Die synergistische, das heißt die verstärkende Wirkung der erfindungsgemäß vorgeschlagenen Lösemittelgemische tritt auf, wenn in diesen Gemischen wenigstens eine Komponente mit polarem Charakter enthalten ist. Unter organischen Verbindungen mit polarem Charakter haben sich Alkohole, Äther, Ketone und Carbonsäuren als besonders wirksam erwiesen. Als besonders wirksam und vorteilhaft erweist sich die Anwendung azeotrop siedender Lösemittelgemische, die auch eine einfachere Verfahrensführung in Bezug auf die Verdampfung und die Kondensation als auch eine Energieeinsparung durch die Siedepunktserniedrigung ermöglichen. Zweckmäßig ist es ferner, wenn Sauerstoff in gebundener Form enthaltende polare aliphatische und/oder cycloaliphatische Verbindungen eingesetzt werden bzw. wenn zur Extraktion von anorganischen Schadstoffen, z.B. Schwermetallen, als polare Verbindungen Monocarbonsäuren, vorzugsweise Ameisensäure, Essigsäure, Propionsäure od.dgl., eingesetzt werden.

Eine Verbesserung der Abscheidewirkung wird erzielt, wenn eine Anreicherung von Wasser in einem Carbonsäure enthaltendem azeotrop siedenden Lösemittelgemisch durch Zugabe von entsprechendem Säureanhydrid und/oder von Phosphorpentoxid bzw. Natriumsulfat vermieden wird. Zur besseren Umweltverträglichkeit ist vorgesehen, daß das eingesetzte Lösungsmittelgemisch und die Oxidationsmittel nur Verbindungen enthalten, die frei von N, S, Cl, Br, F, P und Schwermetallen sind.

Eine bevorzugte Vorgangsweise sieht vor, daß der nach der Eindampfung des Extraktes verbleibende Rückstand, insbesondere Steinkohlenteer, als Einbettungsmatrix für Sonderabfall eingesetzt wird, gegebenenfalls nach Behandlung und/oder Vermischung mit einer basisch wirkenden Substanz, z.B. Oxiden und/oder Hydroxiden von Alkali- und/oder Erdalkalimetallen, basisch wirkendem Sonderabfall od.dgl..

In den nachfolgenden Beispielen soll die Wirkung derartiger Gemische dargestellt werden.

Beispiel 1: Eine Eisenbahnschwelle aus Lärchenholz, die nach 37 Jahren Verwendung ausgeschieden wurde und im wesentlichen mit Steinkohlenteeröl imprägniert war, wurde auf einer Hobelmaschine senkrecht zur Wuchsrichtung zerkleinert. Nach darauffolgender Homogenisierung der Holzspäne wurden mehrere Proben entnommen und der Gesamtchlorgehalt mit 0,13 Gew.-% ermittelt. 500 g der so erhaltenen Holzspäne wurden in einer Soxhletapparatur 160 Minuten lang mit Benzol extrahiert. Das Rücklaufverhältnis der Apparatur wurde so eingestellt, daß 40 Lösemitteldurchläufe zu verzeichnen waren. Der Gewichtsverlust des imprägnierten Holzes betrug 16,7%. Der Gesamtchlorgehalt des extrahierten Holzes, zurückgerechnet auf die ursprünglich eingesetzte Menge betrug 0,12 Gew.-%.

Beispiel 2 : 500 g Holzspäne, vorbereitet wie in Beispiel 1 angeführt, wurden unter gleichen Bedingungen mit n-Hexan extrahiert. Der Gewichtsverlust lag bei 11,3%, der Gesamtchlorgehalt betrug 0,13%.

Beispiel 3 : Es wurde wie im Beispiel 1 angeführt, mit 2-Propanol extrahiert. Der Gewichtsverlust betrug 14,7%, der Gesamtchlorgehalt betrug 0,11%.

Beispiel 4 : Es wurde wie im Beispiel 1 angeführt, 80 Minuten mit n-Hexan und danach weitere 80 Minuten mit 2-Propanol extrahiert. Der Gewichtsverlust betrug 17,3%, der Gesamntchlorgehalt betrug 0,09%.

Beispiel 5 : Es wurde wie im Beispiel 1 angeführt, mit einem azeotrop siedenden Gemisch von 77 Gew.-% n-Hexan und 23 Gew.-% 2-Propanol extrahiert. Der Gewichtsverlust betrug 19,6 Gew.-%, der Gesamtchlorgehalt lag unter dem Blindwert von 0,07 Gew.-% wie er an Proben aus unbehandeltem luftgetrocknetem Lärchenholz ermittelt wurde.

Beispiel 6 : Von einem ausgeschiedenen Leitungsmast aus Fichtenholz mit einer Grundimprägnierung von Holzschutzmittel auf Basis Chrom-Kupfer-Arsenat und einer Nachimprägnierung durch Injektion mit Quecksilber(II)-chlorid wurde der Mastfuß abgeschnitten, längs zur Wuchsrichtung in etwa 5 mal 3 cm messende Teile gespalten, und diese Teile mit einer Hackmaschine senkrecht zur Wuchsrichtung in etwa 3 mm dicke Späne zerkleinert. Nach darauffolgender Homogenisierung der Holzspäne wurden mehrere Proben entnommen und der Gesamtchlorgehalt wurde mit 0,24 Gew.-%, der Arsengehalt mit 0,18 Gew.-% und der Quecksilbergehalt mit 0,65 Gew.-% ermittelt. 500 g der so erhaltenen Holzspäne wurden in einer Soxhletapparatur 90 Minuten lang mit einem azeotrop siedenden Gemisch von 67 Gew.-% Cyclohexan und 33 Gew.-% Ameisensäure extrahiert. Das Rücklaufverhältnis der Apparatur wurde so eingestellt, daß 18 Lösemitteldurchläufe zu verzeichnen waren. Der Gesamtchlorgehalt des extrahierten Holzes lag unter der Nachweisgrenze von 0,07%, der Arsengehalt unter der Nachweisgrenze von 0.007 Gew.-%, der Quecksilbergehalt unter der Nachweisgrenze von 0,0002 Gew.-%. So wie die Proben aus Beispiel 5 wurden die extrahierten Holzspäne verbrannt und zusätzlich das Rauchgas durch eine 2 Gew.-%ige Lösung von Calziumhydroxid geleitet. Sowohl im Kondensat als auch in der Waschflüssigkeit konnten weder Chlorid noch Fluorid noch Arsen oder Quecksilber nachgewiesen werden.

Bei Eindampfung der Extrakte wurde festgestellt, daß der Rückstand keineswegs mehr dem ursprünglich verwendeten Steinkohlenteeröl entspricht, vielmehr ist durch Verflüchtigung der niedermolekularen Komponenten und Oxidation der enthaltenen Verbindungen eine teerähnliche Masse entstanden, die als gealteter bzw. oxidierter Steinkohlenteer angesehen werden kann. Dieser Rückstand kann weiterverwendet werden, beispielsweise als Zusatz zu Epoxidharzen, es wird jedoch vorgeschlagen, diesen Rückstand als Einbettungsmatrix für Sonderabfall zu verwenden. Als besonders vorteilhaft erweist sich, den Rückstand vor der Weiterverwendung als Einbettungsmatrix für Sonderabfall, mit einer basisch wirkenden Substanz zu behandeln. Durch diese Maßnahme werden saure Bestandteile bzw. reaktive Gruppen neutralisiert, so daß eine chemisch stabilisierte Einbettungsmatrix erhalten wird.

Als basisch wirkende Substanzen werden Oxide und/oder Hydroxide von Alkali- und/oder Erdalkalimetallen vorgeschlagen. Als besonders ökonomisch und vorteilhaft wird angesehen, für die Stabilisierung des Extraktionsrückstandes basisch wirkenden Sonderabfall zu verwenden. Als basisch wirkender Sonderabfall können beispielsweise alkalisch konditionierte getrocknete Galvanikschlämme oder basische Rückstände aus der Aufarbeitung von Gasentladungslampen verwendet werden. Die so stabilisierte Einbettungsmatrix kann durch Zumischung von beispielsweise Bitumen und/oder Paraffin und/oder Ozokerit und/oder Montanwachs den Erfordernissen angepaßt werden. Durch Verwendung des Extraktionsrückstandes als Einbettungsmatrix wird nicht nur eine Ersparnis gegenüber konventionellen Matrices wie Bitumen oder Schwefel erzielt, es werden auch die Schadstoffe bzw. Rückstände aus der Holzextraktion sinnvoll weiterverwendet.

Bei der Verbrennung extrahierter Holzproben wurde festgestellt, daß durch den erfindungsgemäßen Extraktionsprozeß nicht nur die Imprägnierungsmittel, sondern auch die natürlichen Harzbestandteile aus dem Holz entfernt werden, so daß bei der Verbrennung von extrahiertem Holz weniger Schadstoffe in das Rauchgas bzw. in die Atmosphäre abgegeben werden, als bei der Verbrennung von unbehandeltem Holz. Bei einem Verbrennungsversuch wurden extrahierte Holzspäne aus dem Beispiel 5 verbrannt, das Rauchgas durch ein Rohr aus Quarzglas geleitet und bis auf Raumtemperatur abgekühlt. In gleicher Weise wurden Holzspäne aus natürlichem unbehandeltem getrocknetem Lärchenholz verbrannt. Während sich bei der Verbrennung des extrahierten Holzes lediglich ein dünner, kaum sichtbarer Film von wasserunlöslichen Substanzen und wässriges Kondensat im Quarzrohr niedergeschlagen hatte, entstand bei der Verbrennung des unbehandelten Holzes ein deutlicher gelber geruchsintensiver Belag von Holzteer und wäßriges Kondensat. Eine Verbrennung von erfindungsgemäß extrahiertem Holz kann daher vorteilhafterweise in einer konventionellen Feuerungsanlage durchgeführt werden. Erfindungsgemäß wird vorgeschlagen, die bei der Verbrennung des extrahierten Holzes frei werdende Verbrennungsenergie für den Betrieb der Extraktion und für die Eindampfung des Extraktes zu verwenden. Der Energieüberschuß kann als Wärme und/oder zur Stromerzeugung genutzt werden.

Bei der Extraktion von anorganische Holzschutzmittel enthaltenden Holzproben bzw. von Holzkohle wurde festgestellt, daß die Extraktion der Schadstoffe besonders effizient vor sich geht, wenn das Lösemittelgemisch eine aliphatische Monocarbonsäure enthält. Dabei haben sich Ameisensäure und Essigsäure als besonders wirksam herausgestellt. Bei der Anwendung anorganischer Holzschutzmittel wurden bzw. werden in großem Umfang Gemische auf Basis Chrom-Kupfer-Fluorid angewendet. Daneben ist auch die Verwendung von Arsen- oder Antimonverbindungen bekannt. Bekannt ist auch die Verwendung von Quecksilber (II) chlorid zur Nachimprägnierung im Injektionsverfahren. Bei der Anwendung dieser Holzschutzmittel kommt es zur Fixierung, das heißt zur Reaktion der Verbindungen mit den Holzbestandteilen. Bei Anwendung von Gemischen auf Basis Chrom-Kupfer-Fluorid kommt es zur Bildung von Chromkryolith. Daneben ist noch ein Überschuß an Fluorid vorhanden, der als mobil bezeichnet wird. Werden derartige imprägnierte Hölzer mit wäßrigen verdünnten Mineralsäuren behandelt, werden zwar die mobilen Fluoride zum größten Teil entfernt, die fixierten Bestandteile gehen jedoch nur zu einem geringen Teil in Lösung. Es wurde auch beobachtet, daß das Holz durch Wasseraufnahme aufquillt und die Durchbringung mit dem Lösemittel erschwert wird.

Überraschenderweise wurde nun festgestellt, daß mit den erfindungsgemäßen Lösenmittelgemischen, die eine Monocarbonsäure wie Ameisensäure oder Essigsäure enthalten, auch die fixierten Fluoride entfernt werden können. In gleicher Weise werden auch Quecksilber-, Arsen- und Antimonverbindungen entfernt. Weiters wurde festgestellt, daß die Extraktion rascher und vollständiger verläuft, wenn das im Holz in Form von Feuchtigkeit enthaltene Wasser entfernt bzw. gebunden wird.

Es ist bekannt, daß wasserfreie Lösemittel Wasser auch in Spuren sehr gut aufnehmen, so daß es sinnvoll und vorteilhaft ist, das im Holz enthaltene Wasser zu entfernen, um die Zugänglichkeit der Lösemittel in die Holzporen bzw. Kapillaren zu verbessern. Die Entwässerung der erfindungsgemäß vorgeschlagenen Lösemittelgemische kann in bekannter Weise, beispielweise mit Phosphorpentoxid oder Natriumsulfat erfolgen, erfindungsgemäß wird jedoch vorgeschlagen, daß eine Anreicherung von Wasser in einem Essigsäure enthaltendem Gemisch azeotrop siedender Lösemittel durch Zugabe von Essigsäureanhydrid vermieden wird.

Bei der Extraktion von Holzproben wurde festgestellt, daß für die Zugänglichkeit der Lösemittel bzw. für die Durchdringung des Holzes mit dem Lösemittel, die Anordnung der Schnittflächen bei der Zerkleinerung des zu extrahierenden Holzes von Bedeutung ist. Es wird vorgeschlagen, das zu extrahierende Holz senkrecht zur Wuchsrichtung zu zerkleinern. Diese Maßnahme bietet auch den Vorteil, daß der Energieaufwand für die Zerkleinerung des Holzes niedrig gehalten wird. In Versuchen wurde festgestellt, daß der Zeitaufwand für die Extraktion von imprägniertem Holz das senkrecht zur Wuchsrichtung bei einer resultierenden Dicke der Holzspäne von 3 mm zerkleinert wurde, gleich groß ist wie für Holzspäne von 0,5 mm, die durch Zerkleinerung längs zur Wuchsrichtung erhalten wurden. Holzkohle sollte in Stücken bis zu einer Größe von 10 × 10 × 10 cm zur Extraktion vorliegen.

Naturgemäß fällt bei der Extraktion anorganischer Schadstoffe kein steinkohlenteerartiger Rückstand an, doch können diese anorganischen Rückstände weiterverwendet, oder aber mit den Rückständen aus der Extraktion öliger Holzschutzmittel vereinigt werden. Erfindungsgemäß wird vorgeschlagen den Extraktionsprozeß in einer geschlossenen Anlage bei Atmosphärenunterdruck durchzuführen, um ein Austreten von Lösemitteldämpfen und/oder Schadstoffen in die Biosphäre zu verhindern.

Das erfindungsgemäße Verfahren ist geeignet, mit Schadstoffen belastetes Holz einer sinnvollen und ökonomischen Verwertung zuzuführen und hat die Vorteile, daß Nutzenergie ohne Umweltbelastung sowie eine Einbettungsmatrix für Sonderabfall gewonnen wird und daß dabei keine bzw. keine nennenswerten Restmengen an Sonderabfall entstehen.

Es hat sich ferner erwiesen, daß es zweckmäßig ist, daß insbesondere bei der Abscheidung von Schwermetallen aus Holzkohle das Lösemittelgemisch zumindest während eines Teiles des Extrak-

tionsvorganges mit Luft, $O_2$ od.dgl. zur Sauerstoffanreicherung begast oder mit einem Oxidationsmittel, z.B. $H_2O_2$, versetzt wird, in einer Menge, die ausreicht, die vorhandenen Metalle in Salze überzuführen.

Im folgenden wird die Erfindung anhand der Zeichnung beispielsweise erläutert, die schematisch eine Anlage zur Durchführung des erfindungsgemäßen Verfahrens zeigt.

In einem Extraktionsbehälter 1 befinden sich zerkleinerte Holzstücke 16, die von mit Schadstoffen beladenen, z.B. imprägnierten zu entsorgenden Holbauteilen stammen oder Holzkohlestücke sind. In einem Lösemittelbehälter bzw. -verdampfer 11 befinden sich das erfindungsgemäße Lösemittelgemisch 17, das mit einer Heizeinrichtung 4 verdampft wird. Über eine Leitung 5 werden die Dämpfe einem Kondensator 6 mit einer Kühlschlange 7 und einer Kühleinrichtung 8 zugeführt, und das Kondensat gelangt in den darunterliegenden Extraktionsbehälter 1 und rinnt über die Holzstücke. Über eine Leitung 9 wird das Lösemittelgemisch mit den aus dem Holz herausgelösten Schadstoffen dem Lösemittelbehälter 11 zugeführt, in dem eine Anreicherung der Schadstoffe erfolgt, da die über die Leitung 5 abgeführten Lösemitteldämpfe schadstofffrei sind. Über eine Leitung 10 wird das angereicherte Lösemittelgemisch kontinuierlich oder bei Notwendigkeit in eine Eindampfeinrichtung 3 geleitet, die mit einer Heizeinrichtung 12 beheizt ist.

Das Lösemittelgemisch wird abgedampft und über eine Leitung 13 in den Lösemittelverdampfer 11 zurückgeführt, während der eingedickte Rückstand, enthaltend insbesondere Steinkohlenteer und andere organische und anorganische Schadstoffe, in Behälter 14, z.B. Fässer, abgefüllt wird, z.B. um mit über Zufuhreinrichtungen 15 zugeführten anderen zu entsorgenden Schadstoffen und/oder weiteren Matrixmaterialien, z.B. Bitumen, vermischt zu werden.

Mit 2 ist eine Verbrennungseinrichtung für das von Schadstoffen befreite Holz bezeichnet, von der die Heizeinrichtungen 4 und 12 mit Heizenergie versorgt werden.

Die dem Extraktor 1 zugeführten Holzschnitzel werden auf eine Dicke von 4-8 mm quer zur Faserung zerkleinert. Dazu ist vorgesehen, daß dem Extraktor 1 eine Zerkleinerungseinrichtung vorgeordnet ist, in der das Holz bzw. die Holzkohle vorzugsweise quer zur Wuchsrichtung zerkleinerbar ist. Ferner kann dem Extraktor 1 eine Einrichtung zur thermischen Vorbehandlung des Holzes vorgeordnet sein. Die Zerkleinerungseinrichtung bzw. die Einrichtung zur thermischen Vorbehandlung sind in der Zeichnung nicht dargestellt.

Vorteilhaft ist es, wenn dem Extraktor 1 eine Trocknungseinrichtung 22 zum Austreiben des Lösemittelgemisches aus dem Holz bzw. der Holzkohle nachgeordnet ist, die z.B. von einer Heizkammer, einer Induktionsspule 19, durch die das Holz bzw. die Holzkohle hindurchbewegt werden, od.dgl. gebildet ist. Wie mit dem Pfeil 23 angedeutet, werden die Holzstücke, insbesondere Holzkohlenstücke, nach der Extraktion aus dem Extraktor 1, z.B. über einen Schraubenförderer, einer Trocknungseinrichtung 22 zugeführt, die von einer mit einer mit Leitungen 18 stromversorgten Induktionsspule 19 umgebenen Kammer gebildet ist, die von den Holzstücken durchlaufen wird. Das in der Kammer ausgetriebene Lösemittel, das nahezu keine Schadstoffe enthält, wird über eine Leitung 21 gegebenenfalls über einen Kühler 20 in den Lösemittelbehälter 11 oder in die Eindampfeinrichtung 3 rezirkuliert. Das getrocknete Holz wird der Verbrennungseinrichtung 2 zugeführt. Getrocknete Holzkohle wird verpackt und abtransportiert. Die Trocknung kann auch thermisch, kapazitiv, mit Mikrowellen usw. erfolgen.

Da Schwermetalle in Holzkohle als Metall vorliegen, weil sie während der Carbonisierung reduziert werden, ist die Zufuhr eines Oxidationsmittels zum Lösemittelgemisch zweckmäßig, um die Metalle in Salze überzuführen. Dazu ist an den Extraktor 1 eine Einrichtung 24 zur Zufuhr eines Oxidationsmittels angeschlossen.

**Patentansprüche**

1. Verfahren zur Behandlung von bei Verbrennung Schadstoffe freisetzendem(r) Holz bzw. Holzkohle, vorzugsweise Holzbauteilen, Bauholz usw., insbesondere von mit Holzschutzmitteln behandelten, z.B. konservierten, gestrichenen, imprägnierten Holzbauteilen bzw. Bauholz, z.B. Eisenbahnschwellen, Leitungsmasten, Wasser- und Brückenhölzern od.dgl., zum Entzug von Schadstoffen, dadurch gekennzeichnet, daß gegebenenfalls nach Zerkleinerung des Holzes bzw. der Holzkohle, das für die Extraktion in geeigneter Stückgröße vorliegende Holz bzw. die stückige Holzkohle einer Extraktion, insbesondere der organischen Schadstoffe, mit einem Lösungsmittelgemisch unterworfen wird, das zumindest einen aliphatischen und/oder cycloaliphatischen Kohlenwasserstoff und im Ausmaß von 2 bis 80%, vorzugsweise 3 bis 60%, des Lösungsmittelgemisches zumindest eine polare aliphatische und/oder cycloaliphatische Verbindung enthält.

2. Verfahren nach Anspruch 1, dadurch gekennzeichnet, daß das Holz vor der Extraktion einer thermischen Vorbehandlung, z.B. einem Verschwelen, einem Pyrolysieren, einem Carbonisieren, gegebenenfalls bis zum Stadium der Holzkohle, unterworfen wird.

3. Verfahren nach Anspruch 1 oder 2, dadurch gekennzeichnet, daß Sauerstoff in gebundener Form enthaltende polare aliphatische und/oder cycloaliphatische Verbindungen eingesetzt werden.

4. Verfahren nach einem der Ansprüche 1 bis 3, dadurch gekennzeichnet, daß als Kohlenwasserstoffe n-Hexan eingesetzt wird.

5. Verfahren nach einem der Ansprüche 1 bis 4, dadurch gekennzeichnet, daß als polare aliphatische und/oder cycloaliphatische Verbindungen nur aus C, H und O aufgebaute Verbindungen, z.B. Ketone, Äther, Alkohole, Carbonsäuren, eingesetzt werden.

6. Verfahren nach einem der Ansprüche 1 bis 5, dadurch gekennzeichnet, daß zur Extraktion von anorganischen Schadstoffen, z.B. Schwermetallen, als polare Verbindungen Monocarbonsäuren, vorzugsweise Ameisensäure, Essigsäure, Propionsäure od.dgl., eingesetzt werden.

7. Verfahren nach einem der Ansprüche 1 bis 6, dadurch gekennzeichnet, daß insbesondere bei der Abscheidung von Schwermetallen aus Holzkohle das Lösungsmittelgemisch zumindest während eines Teiles des Extraktionsvorganges mit Luft, $O_2$ od.dgl. zur Sauerstoffanreicherung begast oder mit einem Oxidationsmittel, z.B. $H_2O_2$, versetzt wird, in einer Menge, die ausreicht, die vorhandenen Metalle in Salze überzuführen.

8. Verfahren nach einem der Ansprüche 1 bis 7, dadurch gekennzeichnet, daß das eingesetzte Lösungsmittelgemisch und die Oxidationsmittel nur Verbindungen enthalten, die frei von N, S, Cl, Br, F, P und Schwermetallen sind.

9. Verfahren nach einem der Ansprüche 1 bis 8, dadurch gekennzeichnet, daß als Lösemittelgemisch ein azeotrop siedendes Gemisch eingesetzt wird oder im Lösemittelgemisch die Komponenten in einem Verhältnis enthalten sind, das auf ± 5% einem azeotrop siedendem Gemisch entspricht.

10. Verfahren nach einem der Ansprüche 1 bis 9, dadurch gekennzeichnet, daß eine Anreicherung von Wasser in einem Carbonsäure enthaltendem azeotrop siedenden Lösemittelgemisch durch Zugabe von entsprechendem Säureanhydrid und/oder von Phosphorpentoxid bzw. Natriumsulfat vermieden wird.

11. Verfahren nach einem der Ansprüche 1 bis 10, dadurch gekennzeichnet, daß die Extraktion in einer geschlossenen Anlage bei Atmosphärenunterdruck durchgeführt wird.

12. Verfahren nach einem der Ansprüche 1 bis 11, dadurch gekennzeichnet, daß der nach der Eindampfung des Extraktes verbleibende Rückstand, insbesondere Steinkohlenteer, als Einbettungsmatrix für Sonderabfall eingesetzt wird, gegebenenfalls nach Behandlung und/oder Vermischung mit einer basisch wirkenden Substanz, z.B. Oxiden und/oder Hydroxiden von Alkali- und/oder Erdalkalimetallen, basisch wirkendem Sonderabfall od.dgl.

13. Verfahren nach einem der Ansprüche 1 bis 12, dadurch gekennzeichnet, daß das von Schadstoffen befreite Holz verbrannt und die beim Verbrennen frei werdende Verbrennungsenergie für die Extraktion bzw. Rückdampfung des Lösemittelgemisches und gegebenenfalls für die Eindampfung des Extraktes eingesetzt wird.

14. Verfahren nach einem der Ansprüche 1 bis 13, dadurch gekennzeichnet, daß das zu extrahierende Holz senkrecht zur Wuchsrichtung, insbesondere in Stücke mit einer Dicke von 3 bis 10 mm, zerkleinert wird.

15. Verfahren nach einem der Ansprüche 1 bis 14, dadurch gekennzeichnet, daß das Holz bzw. die Holzkohle nach der Extraktion getrocknet wird bzw. das Lösemittelgemisch durch Wärmezufuhr ausgedampft bzw. ausgetrieben wird.

16. Anordnung zur Behandlung von bei Verbrennung Schadstoffe freisetzendem Holz bzw. Holzkohle, vorzugsweise Holzbauteilen, Bauholz usw., insbesondere von mit Holzschutzmitteln behandelten, z.B. konservierten, gestrichenen, imprägnierten Holzbauteilen bzw. Bauholz, z.B. Eisenbahnschwellen, Leitungsmasten, Wasser- und Brückenhölzern od.dgl., zum Entzug von Schadstoffen, zur Durchführung des Verfahrens nach einem der Ansprüche 1 bis 15, wobei für das in zerkleinerter Form vorliegende Holz bzw. die stückige Holzkohle ein Extraktor (1) vorgesehen ist, dadurch gekennzeichnet, daß dem einen Lösungsmittelbehälter (1) umfassenden Extraktor (1) eine Trocknungseinrichtung (22) zum Austreiben des Lösungsmittelgemisches aus dem Holz bzw. der Holzkohle nachgeordnet ist, die z.B. von einer Heizkammer, einer Induktionsspule (19), durch die das Holz bzw. die Holzkohle hindurchbewegt werden, od.dgl. gebildet ist und daß das in der Trocknungseinrichtung (22) ausgetriebene schadstoffreie Lösemittelgemisch in den Extraktor (1) in den Lösemittelbehälter (11) rezirkuliert ist.

17. Anordnung nach Anspruch 16, dadurch gekennzeichnet, daß dem Extraktor (1) eine Verbrennungsanlage (2) für das von Schadstoffen befreite Holz zugeordnet ist, mit der der Lösungsmittelverdampfer (1) und/oder eine Eindampfeinrichtung (3) für den Extraktionsrückstand beheizbar ist.

18. Anordnung nach Anspruch 16 oder 17, dadurch gekennzeichnet, daß dem Extraktor (1) eine Zerkleinerungseinrichtung vorgeordnet ist, in der das Holz, vorzugsweise quer zur Wuchsrichtung, bzw. die Holzkohle, zerkleinerbar ist.

19. Anordnung nach einem der Ansprüche 16 bis 18, dadurch gekennzeichnet, daß dem Extraktor (1) eine Einrichtung zur thermischen Vorbehandlung des Holzes vorgeordnet ist.

20. Anordnung nach einem der Ansprüche 16 bis 19, dadurch gekennzeichnet, daß an den Extraktor (1) eine Einrichtung (24) zur Zufuhr eines Oxidationsmittels angeschlossen ist.

## Claims

1. A process for treating wood or charcoal emitting toxic substances on combustion, preferably wooden structural elements, structural timber and the like, in particular wooden structural elements or structural timber, for instance railroad sleepers, utility poles, timber used in water or on bridges and the like, treated, for instance preserved, painted, impregnated with wood preservatives, for the extraction of toxic substances, characterized in that, optionally subsequent to the comminution of the wood or the charcoal, the wood present in pieces of suitable size for extraction or the lumps of charcoal are subjected to an extraction, in particular of the organic toxic substances, by means of a solvent mixture containing at least one aliphatic and/or cycloaliphatic hydrocarbon and, to the extent of 2 to 80 percent, preferably 3 to 60 percent, of the solvent mixture, at least one polar aliphatic and/or cycloaliphatic compound.

2. The process according to claim 1, wherein prior to extraction, the wood is subjected to a thermal treatment, for instance carbonizing at low temperatures, pyrolyzing, carbonizing, optionally up to the stage of charcoal.

3. The process according to claim 1 or 2, wherein polar aliphatic and/or cycloaliphatic compounds containing bound oxygen are employed.

4. The process according to any one of the claims 1 to 3, wherein n-hexane is used as the hydrocarbon.

5. The process according to any one of the claims 1 to 4, wherein compounds composed of C, H and O exclusively, such as ketones, ethers, alcohols and carboxylic acids, are used as the polar aliphatic and/or cycloaliphatic compounds.

6. The process according to any one of the claims 1 to 5, wherein monocarboxylic acids, preferably formic acid, acetic acid, propionic acid or the like, are used as the polar compounds for the extraction of inorganic toxic substances, for instance heavy metals.

7. The process according to any one of the claims 1 to 6, wherein in particular in the separation of heavy metals from charcoal, air, $O_2$ or the like are added to the solvent mixture for enriching it in oxygen or an oxidant such as $H_2O_2$ is added to it, in a amount sufficient for transforming the metals present into salts, during at least part of the extraction operation.

8. The process according to any one of the claims 1 to 7, wherein the solvent mixture and the oxidants used contain only compounds which are free from N, S, Cl, Br, F, P and heavy metals.

9. The process according to any one of the claims 1 to 8, wherein the solvent mixture employed is an azeotropically boiling mixture or the components are contained in the solvent mixture in a ratio corresponding to ± 5 percent to an azeotropically boiling mixture.

10. The process according to any one of the claims 1 to 9, characterized in that an accumulation of water in an azeotropically boiling solvent mixture containing carboxylic acid is prevented by the addition of an appropriate acid anhydride and/or phosphorous pentoxide or sodium sulfate.

11. The process according to any one of the claims 1 to 10, wherein the extraction is carried out in a closed installation at sub-atmospheric pressure.

12. The process according to any one of the claims 1 to 11, wherein the residue obtained on evaporation of the extract, in particular coaltar, is used as an embedding matrix for special refuse, optionally subsequent to treatment and/or mixing with a basically active substance, for instance oxides and/or hydroxides of alkali metals or alkaline earth metals, basically active special refuse or the like.

13. The process according to any one of the claims 1 to 12, wherein the wood freed from toxic substances is burned and the combustion energy released during combustion is used for the extraction or back-evaporation of the solvent mixture and optionally for the concentration of the extract.

14. The process according to any one of the claims 1 to 13, wherein the wood to be extracted is comminuted perpendicularly to the orientation of growth, in particular to pieces of a thickness of 3 to 10 mm.

15. The process according to any one of the claims 1 to 14, wherein the wood or the charcoal is dried subsequent to extraction or the solvent mixture is evaporated or expelled by the addition of heat.

16. An apparatus for the treatment of wood or charcoal emitting toxic substances on combustion, preferably wooden structural elements, structural timber and the like, in particular wooden structural elements or structural timber treated with wood preservatives, for instance preserved, painted, impregnated, for instance railroad sleepers, utility poles, timber used in water or on bridges or the like, for the extraction of toxic substances, for carrying out the process according to any one of the claims 1 to 15, an extractor (1) being provided for the wood present in communited form or the lumps of charcoal, characterized in that a drying means (22) for expelling the solvent mixture from the wood or the charcoal is disposed downstream of the extractor (1) comprising a solvent container (11), the drying means (22) being formed as a heating chamber, an induction coil through which the wood or the charcoal is moved, or the like, and that the solvent mixture expelled in the drying means (22) and free of toxic substances is recycled to the solvent container (11) in the extractor(1).

17. The apparatus according to claim 16, wherein a combustion plant (2) for the wood freed from toxic substances and by means of which the solvent evaporator (1) and/or a condensing means (3) for the extraction residue are heatable is associated with the extractor (1).

18. The apparatus according to claim 16 or 17, wherein a comminuting means in which the wood, preferably transverse to the orientation of growth, or the charcoal can be comminuted, is disposed upstream of the extractor (1).

19. The apparatus according to any one of the claims 16 to 18, wherein a means for the thermal pretreatment of the wood is disposed upstream of the extractor (1).

20. The apparatus according to any one of the claims 16 to 19, wherein a means (24) for supplying an oxidant is connected to the extractor (1).


## Revendications

1. Procédé de traitement du bois ou du charbon de bois émettant des substances nocives à la combustion, notamment des éléments de structure en bois, du bois de construction, etc., permettant plus particulièrement d'éliminer les substances nocives d'éléments de structure en bois ou du bois de construction tels que traverses de voies ferrées, poteaux électriques, éléments de bois immergés et éléments de ponts ou autres, ayant été traités avec des produits de protection du bois tels qu'agents de conservation, peinture, agents d'imprégnation, caractérisé en ce que, après avoir le cas échéant réduit au préalable le bois ou le charbon de bois en fragments, le bois ou le charbon de bois se présentant en fragments ou en morceaux d'une dimension appropriée pour l'extraction sont soumis à une extraction, en particulier des substances nocives organiques, à l'aide d'un mélange de solvants contenant au moins un hydrocarbure aliphatique et/ou cycloaliphatique et, dans les proportions de 2 à 80%, avantageusement de 3 à 60% du mélange de solvants, au moins un composé aliphatique et/ou cycloaliphatique polaire.

2. Procédé selon la revendication 1, caractérisé en ce que le bois est soumis avant l'extraction à un traitement thermique préalable, p.ex. une combustion incomplète, une pyrolise ou une carbonisation, le cas échéant jusqu'au stade du charbon de bois.

3. Procédé selon la revendication 1 ou 2, caractérisé en ce que l'on utilise des composés aliphatiques et/ou cycloaliphatique polaires contenant de l'oxygène sous forme combinée.

4. Procédé selon une des revendications 1 à 3, caractérisé en ce que l'on utilise comme hydrocarbures des n-hexanes.

5. Procédé selon une des revendications 1 à 4, caractérisé en ce que l'on utilise comme composés aliphatiques et/ou cycloaliphatiques polaires uniquement des composés constitués de C, H et O, p.ex. cétones, éthers, alcools, acides carboxyliques.

6. Procédé selon une des revendications 1 à 5, caractérisé en ce que l'on utilise comme composés polaires pour l'extraction de substances nocives anorganiques, p.ex. de métaux lourds, des acides monocarboxyliques, avantageusement de l'acide formique, de l'acide acétique, de l'acide propionique, ou autres acides analogues.

7. Procédé selon une des revendications 1 à 6, caractérisé en ce que, en particulier pour éliminer les métaux lourds du charbon de bois, on envoie dans le mélange de solvants, au moins pendant une partie du processus d'extraction, de l'air, $O_2$ ou autre gaz analogue, pour enrichir le mélange en oxygène, ou on ajoute un agent d'oxidation, p.ex. $H_2O_2$ en proportions suffisantes pour transformer les métaux présents en sels.

8. Procédé selon une des revendications 1 à 7, caractérisé en ce que le mélange de solvants utilisé et les agents d'oxydation ne contiennent que des corps exempts de N, S, Cl, Br, F, P et de métaux lourds.

9. Procédé selon une des revendications 1 à 8, caractérisé en ce que l'on utilise comme mélange de solvants un mélange à ébullition azéotrope ou que le mélange de solvants est constitué de composants selon une proportion correspondant à ± 5% à un mélange à ébullition azéotrope.

10. Procédé selon une des revendications 1 à 9, caractérisé en ce que l'on évite un enrichissement en eau du mélange à ébullition azéotrope contenant un acide carboxylique en ajoutant un anhydride de l'acide correspondant et/ou de l'anhydride phosphorique ou du sulfate de sodium.

11. Procédé selon une des revendications 1 à 10, caractérisé en ce que l'extraction a lieu dans un appareillage fermé sous une pression inférieure à la pression atmosphérique.

12. Procédé selon une des revendications 1 à 11, caractérisé en ce que le résidu, en particulier le goudron de houille, obtenu après concentration de l'extrait par évaporation est utilisé comme matrice d'enrobage pour les déchets polluants, le cas échéant après traitement-par et/ou mélange avec une substance à activité basique, p.ex. oxydes et/ou des hydroxydes de métaux alcalins et/ou alcalinoterreux, déchets polluants à activité basique et autres substances analogues.

13. Procédé selon une des revendications 1 à 12, caractérisé en ce que le bois débarrassé des substances nocives est brûlé et que l'énergie libérée par la combustion est utilisée pour l'extraction ou la ré-évaporation du mélange de solvants et le cas échéant pour la concentration de l'extrait par évaporation.

14. Procédé selon une des revendications 1 à 13, caractérisé en ce que le bois à traiter est coupé perpendiculairement au sens de croissance, en particulier en fragments de 3 à 10 mm d'épaisseur.

15. Procédé selon une des revendications 1 à 14, caractérisé en ce que le bois ou le charbon de bois est séché après extraction ou que le mélange de solvants est expulsé ou éliminé par évaporation ou expulsé sous l'effet de la chaleur.

16. Appareillage pour le traitement du bois ou du charbon de bois émettant des substances nocives à la combustion, notamment des éléments de structure en bois, du bois de construction, etc., permettant plus particulièrement d'éliminer les substances nocives d'éléments de structure en bois ou du bois de construction tels que traverses de voies ferrés, poteaux électriques, éléments de bois immergés et éléments de ponts ou autres, ayant été traités avec des produits de protection p.ex. agents de conservation, peinture, agents d'imprégnation du bois, conformément au procédé selon une des revendications 1 à 15, prévoyant pour le bois réduit en fragments ou le charbon de bois en morceaux un extracteur (1) caractérisé en ce qu'en aval de l'extracteur (1) comportant un réservoir à solvants (11) se trouve un dispositif de séchage (22) pour expulser le mélange de solvants du bois ou du charbon de bois, dispositif consistant par exemple en une chambre chauffante, une bobine d'induction (19) par laquelle passe le bois ou le charbon de bois, ou autre dispositif analogue, et que le mélange de solvants exempt de substances nocives expulsé dans le dispositif de séchage (22) est ramené à l'extracteur (1) dans le réservoir de solvants (11).

17. Appareillage selon la revendication 16, caractérisé en ce qu'est adjoint à l'extracteur (1) un dispositif de combustion (2) pour le bois dont ont été extraites les substances nocives, permettant de chauffer l'évaporateur de solvants (1) et/ou un dispositif de concentration par évaporation (3) pour le résidu d'extraction.

18. Appareillage selon la revendication 16 ou 17, caractérisé en ce qu'il est prévu en amont de l'extracteur (1) un dispositif de fragmentation dans lequel le bois ou le charbon de bois peuvent être réduits en fragments, cette fragmentation se faisant pour le bois avantageusement transversalement par rapport au sens de croissance.

19. Appareillage selon une des revendication 16 à 18, caractérisé en ce qu'il est prévu en amont de l'extracteur (1) un dispositif pour le traitement thermique préalable du bois.

20. Appareillage selon une des revendication 16 à 19, caractérisé en ce que l'extracteur (1) est raccordé à un dispositif (24) permettant d'ajouter un oxydant.